# EUROPEAN PATENT APPLICATION

(11) **EP 3 343 461 A1**
(43) Date of publication of application: **04.07.2018**
(21) Application number: 17207173.0
(22) Date of filing: 13.12.2017
(51) Int. Cl.: G06N 3/04, G06N 3/063

(54) **APPARATUS AND METHOD FOR CONFIGURING FAN-IN AND FAN-OUT CONNECTIONS IN A NEUROMORPHIC PROCESSOR**

(30) Priority: 30.12.2016 US 201615396147
(71) Applicant: INTEL Corporation, Santa Clara, CA 95054 (US)
(72) Inventor: KUMAR, Raghavan, Hillsboro, OR Oregon 97124 (US); SUMBUL, Huseyin E., Hillsboro, OR Oregon 97124 (US); CHEN, Gregory K., Hillsboro, OR Oregon 97124 (US); KNAG, Phil, Hillsboro, OR Oregon 97124 (US)
(74) Representative: Samson & Partner Patentanwälte mbB

(57) **Abstract**

Apparatus and method for configuring large numbers of fan-in and fan-out connections in a neuromorphic computer. For example, one embodiment of an apparatus comprises: a plurality of neurons, each neuron uniquely identifiable with a neuron identifier (ID); at least one memory to store neuron addresses with wildcard values to establish fan-in and/or fan-out connections between the neurons; and a router to translate at least one neuron address containing wildcard values into two or more neuron IDs to establish the fan-in and/or fan-out connections between the neurons.

## Description

### BACKGROUND INFORMATION

Synaptic memory size is a major bottleneck in neuromorphic computer design. In a typical neuromorphic computer, synaptic memory can occupy up to 80% of the entire silicon area, making it one of, if not the most, expensive components in terms of space. Moreover, as the fan-in and fan-out connectivity requirements of the neurons dictate the synaptic memory size, current modular neuromorphic computers often place constraints on neurons' connectivity or employ additional storage memory known as connectivity memory to store the addresses of the entire network's fan-in and fan-out connections. Employing additional storage blocks for connectivity is highly inefficient in terms of silicon area. This is also impractical for neuromorphic computers with extremely large (e.g., 10K+) fan-in and fan-out connections that are often found in biological neural networks. For example, in a typical neuromorphic computer with 16k neurons organized in 256 small neuron groups placed on a single Network-on-Chip (NoC), an SRAM of size 16k rows x 16k columns (i.e., 256MB SRAM for 8b weight values) is needed to maintain a flexible full fan-in or fan-out connectivity in the neuromorphic computer.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein like reference numerals refer to like parts throughout the various views unless otherwise specified:
**FIG. 1A** is a block diagram illustrating both an exemplary in-order fetch, decode, retire pipeline and an exemplary register renaming, out-of-order issue/execution pipeline according to embodiments of the invention;
**FIG. 1B** is a block diagram illustrating both an exemplary embodiment of an in-order fetch, decode, retire core and an exemplary register renaming, out-of-order issue/execution architecture core to be included in a processor according to embodiments of the invention;
**FIG. 2** is a block diagram of a single core processor and a multicore processor with integrated memory controller and graphics according to embodiments of the invention;
**FIG. 3** illustrates a block diagram of a system in accordance with one embodiment of the present invention;
**FIG. 4** illustrates a block diagram of a second system in accordance with an embodiment of the present invention;
**FIG. 5** illustrates a block diagram of a third system in accordance with an embodiment of the present invention;
**FIG. 6** illustrates a block diagram of a system on a chip (SoC) in accordance with an embodiment of the present invention;
**FIG. 7** illustrates a block diagram contrasting the use of a software instruction converter to convert binary instructions in a source instruction set to binary instructions in a target instruction set according to embodiments of the invention;
**FIG. 8** is a block diagram illustrating an exemplary neuromorphic computer architecture in accordance to an embodiment;
**FIG. 9A** illustrates a spiking neural network topology;
**FIG. 9B** is an embodiment of a table for tracking neuron addresses;
**FIG. 9C** is a table for storing fan-out and fan-in connections as wildcard masked addresses according to an embodiment;
**FIG. 10A** is a logical representation of a neuromorphic computer configured for full fan-out connections according to an embodiment;
**FIG. 10B** is a spiking neural network topology illustrating a plurality of neurons with full fan-out connections;
**FIG. 11A** is a logical representation of a neuromorphic computer configured for full fan-in connections according to an embodiment;

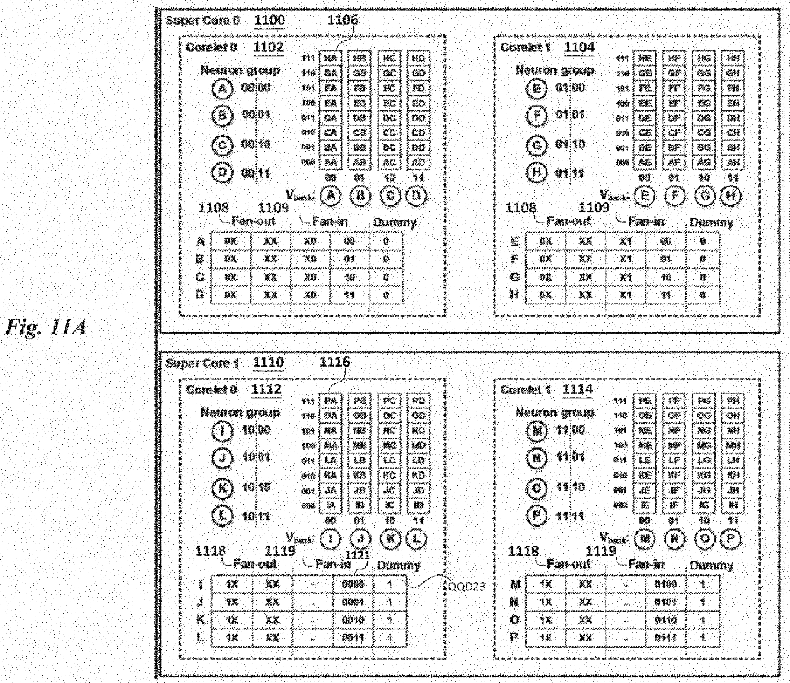

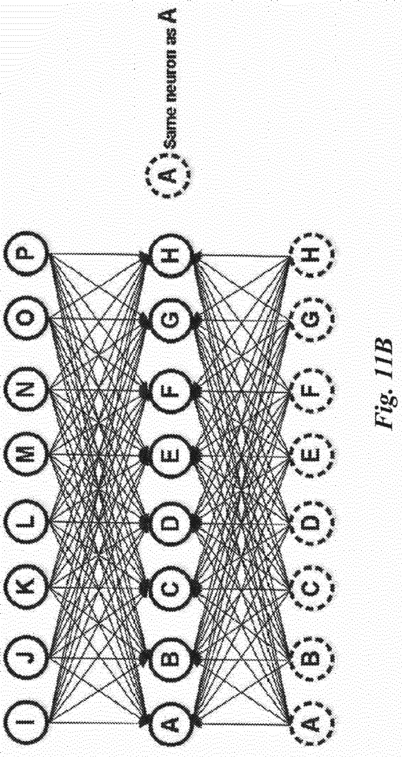

**FIG. 11** **B** is a spiking neural network topology illustrating a plurality of neurons with full fan-in connections; and

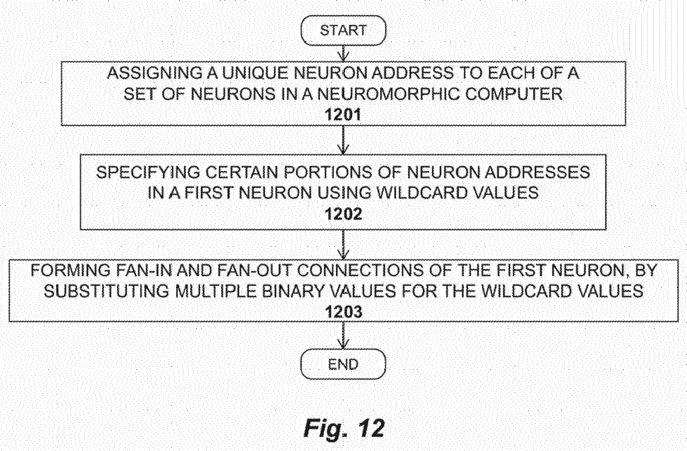

**FIG. 12** illustrates a method for implementing wildcard masked addresses in accordance with one embodiment of the invention.

### DETAILED DESCRIPTION

Embodiments implementing a method for configuring large numbers of fan-in and fan-out connections in a neuromorphic computer are described herein. In the following description, numerous specific details are set forth to provide a thorough understanding of embodiments of the invention. One skilled in the relevant art will recognize, however, that the invention can be practiced without one or more of the specific details, or with other methods, components, materials, structures, etc. In other instances, well-known structures, materials, or operations are not shown or described in detail to avoid obscuring aspects of the invention.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments. For clarity, individual components in the Figures herein may be referred to by their labels in the Figures, rather than by a particular reference number.

### EXEMPLARY PROCESSOR ARCHITECTURES AND DATA TYPES

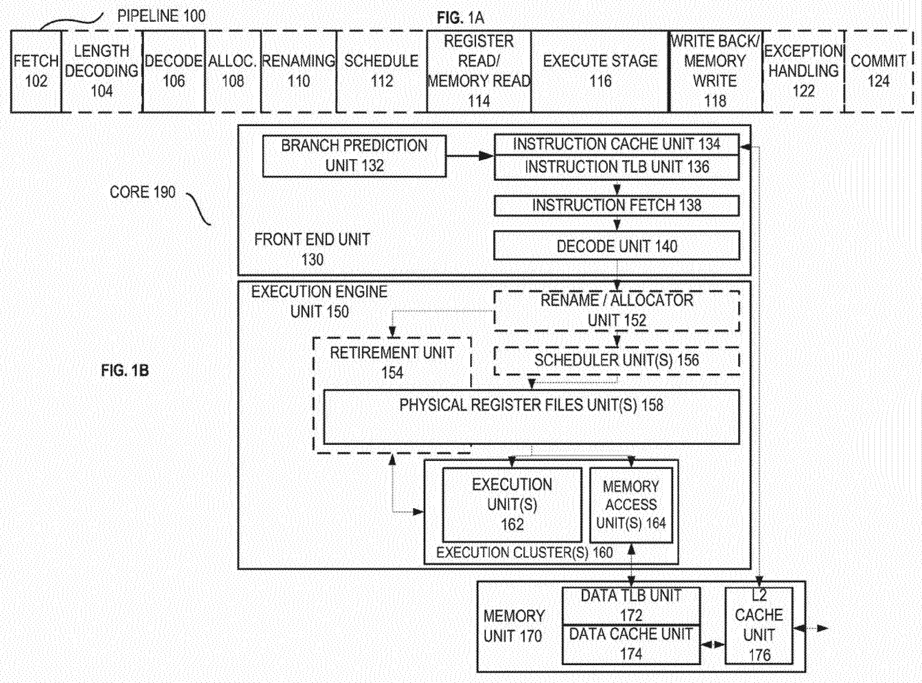

**Figure 1A** is a block diagram illustrating both an exemplary in-order fetch, decode, retire pipeline and an exemplary register renaming, out-of-order issue/execution pipeline according to embodiments of the invention. **Figure 1B** is a block diagram illustrating both an exemplary embodiment of an in-order fetch, decode, retire core and an exemplary register renaming, out-of-order issue/execution architecture core to be included in a processor according to embodiments of the invention. The solid lined boxes in **Figures 1A-B** illustrate the in-order portions of the pipeline and core, while the optional addition of the dashed lined boxes illustrates the register renaming, out-of-order issue/execution pipeline and core.

In **Figure 1A****,** a processor pipeline 100 includes a fetch stage 102, a length decode stage 104, a decode stage 106, an allocation stage 108, a renaming stage 110, a scheduling (also known as a dispatch or issue) stage 112, a register read/memory read stage 114, an execute stage 116, a write back/memory write stage 118, an exception handling stage 122, and a commit stage 124.

**Figure 1B** shows processor core 190 including a front end unit 130 coupled to an execution engine unit 150, and both are coupled to a memory unit 170. The core 190 may be a reduced instruction set computing (RISC) core, a complex instruction set computing (CISC) core, a very long instruction word (VLIW) core, or a hybrid or alternative core type. As yet another option, the core 190 may be a special-purpose core, such as, for example, a network or communication core, compression engine, coprocessor core, general purpose computing graphics processing unit (GPGPU) core, graphics core, or the like.

The front end unit 130 includes a branch prediction unit 132 coupled to an instruction cache unit 134, which is coupled to an instruction translation lookaside buffer (TLB) 136, which is coupled to an instruction fetch unit 138, which is coupled to a decode unit 140. The decode unit 140 (or decoder) may decode instructions, and generate as an output one or more micro-operations, micro-code entry points, microinstructions, other instructions, or other control signals, which are decoded from, or which otherwise reflect, or are derived from, the original instructions. The decode unit 140 may be implemented using various different mechanisms. Examples of suitable mechanisms include, but are not limited to, look-up tables, hardware implementations, programmable logic arrays (PLAs), microcode read only memories (ROMs), etc. In one embodiment, the core 190 includes a microcode ROM or other medium that stores microcode for certain macroinstructions (e.g., in decode unit 140 or otherwise within the front end unit 130). The decode unit 140 is coupled to a rename/allocator unit 152 in the execution engine unit 150.

The execution engine unit 150 includes the rename/allocator unit 152 coupled to a retirement unit 154 and a set of one or more scheduler unit(s) 156. The scheduler unit(s) 156 represents any number of different schedulers, including reservations stations, central instruction window, etc. The scheduler unit(s) 156 is coupled to the physical register file(s) unit(s) 158. Each of the physical register file(s) units 158 represents one or more physical register files, different ones of which store one or more different data types, such as scalar integer, scalar floating point, packed integer, packed floating point, vector integer, vector floating point,status (e.g., an instruction pointer that is the address of the next instruction to be executed), etc. In one embodiment, the physical register file(s) unit 158 comprises a vector registers unit, a write mask registers unit, and a scalar registers unit. These register units may provide architectural vector registers, vector mask registers, and general purpose registers. The physical register file(s) unit(s) 158 is overlapped by the retirement unit 154 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 154 and the physical register file(s) unit(s) 158 are coupled to the execution cluster(s) 160. The execution cluster(s) 160 includes a set of one or more execution units 162 and a set of one or more memory access units 164. The execution units 162 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 156, physical register file(s) unit(s) 158, and execution cluster(s) 160 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 164). It should also be understood that where separate pipelines are used, one or more of these pipelines may be out-of-order issue/execution and the rest in-order.

The set of memory access units 164 is coupled to the memory unit 170, which includes a data TLB unit 172 coupled to a data cache unit 174 coupled to a level 2 (L2) cache unit 176. In one exemplary embodiment, the memory access units 164 may include a load unit, a store address unit, and a store data unit, each of which is coupled to the data TLB unit 172 in the memory unit 170. The instruction cache unit 134 is further coupled to a level 2 (L2) cache unit 176 in the memory unit 170. The L2 cache unit 176 is coupled to one or more other levels of cache and eventually to a main memory.

By way of example, the exemplary register renaming, out-of-order issue/execution core architecture may implement the pipeline 100 as follows: 1) the instruction fetch 138 performs the fetch and length decoding stages 102 and 104; 2) the decode unit 140 performs the decode stage 106; 3) the rename/allocator unit 152 performs the allocation stage 108 and renaming stage 110; 4) the scheduler unit(s) 156 performs the schedule stage 112; 5) the physical register file(s) unit(s) 158 and the memory unit 170 perform the register read/memory read stage 114; the execution cluster 160 perform the execute stage 116; 6) the memory unit 170 and the physical register file(s) unit(s) 158 perform the write back/memory write stage 118; 7) various units may be involved in the exception handling stage 122; and 8) the retirement unit 154 and the physical register file(s) unit(s) 158 perform the commit stage 124.

The core 190 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 190 includes logic to support a packed data instruction set extension (e.g., AVX1, AVX2, and/or some form of the generic vector friendly instruction format (U=0 and/or U=1), described below), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

While register renaming is described in the context of out-of-order execution, it should be understood that register renaming may be used in an in-order architecture. While the illustrated embodiment of the processor also includes separate instruction and data cache units 134/174 and a shared L2 cache unit 176, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

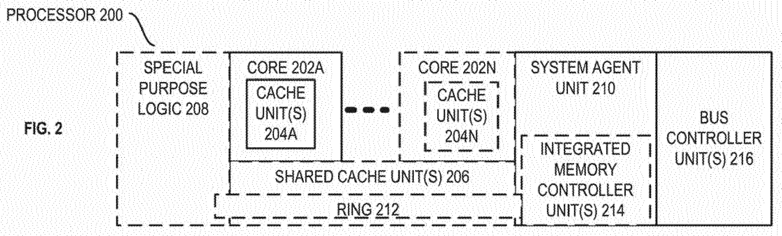

**Figure 2** is a block diagram of a processor 200 that may have more than one core, may have an integrated memory controller, and may have integrated graphics according to embodiments of the invention. The solid lined boxes in **Figure 2** illustrate a processor 200 with a single core 202A, a system agent 210, a set of one or more bus controller units 216, while the optional addition of the dashed lined boxes illustrates an alternative processor 200 with multiple cores 202A-N, a set of one or more integrated memory controller unit(s) 214 in the system agent unit 210, and special purpose logic 208.

Thus, different implementations of the processor 200 may include: 1) a CPU with the special purpose logic 208 being integrated graphics and/or scientific (throughput) logic (which may include one or more cores), and the cores 202A-N being one or more general purpose cores (e.g., general purpose in-order cores, general purpose out-of-order cores, a combination of the two); 2) a coprocessor with the cores 202A-N being a large number of special purpose cores intended primarily for graphics and/or scientific (throughput); and 3) a coprocessor with the cores 202AN being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 206, and external memory (not shown) coupled to the set of integrated memory controller units 214. The set of shared cache units 206 may include one or more mid-level caches, such as level 2 (L2), level 3 (L3), level 4 (L4), or other levels of cache, a last level cache (LLC), and/or combinations thereof. While in one embodiment a ring based interconnect unit 212 interconnects the integrated graphics logic 208, the set of shared cache units 206, and the system agent unit 210/integrated memory controller unit(s) 214, alternative embodiments may use any number of well-known techniques for interconnecting such units. In one embodiment, coherency is maintained between one or more cache units 206 and cores 202-A-N.

In some embodiments, one or more of the cores 202A-N are capable of multi-threading. The system agent 210 includes those components coordinating and operating cores 202A-N. The system agent unit 210 may include for example a power control unit (PCU) and a display unit. The PCU may be or include logic and components needed for regulating the power state of the cores 202A-N and the integrated graphics logic 208. The display unit is for driving one or more externally connected displays.

The cores 202A-N may be homogenous or heterogeneous in terms of architecture instruction set; that is, two or more of the cores 202A-N may be capable of execution the same instruction set, while others may be capable of executing only a subset of that instruction set or a different instruction set. In one embodiment, the cores 202A-N are heterogeneous and include both the "small" cores and "big" cores described below.

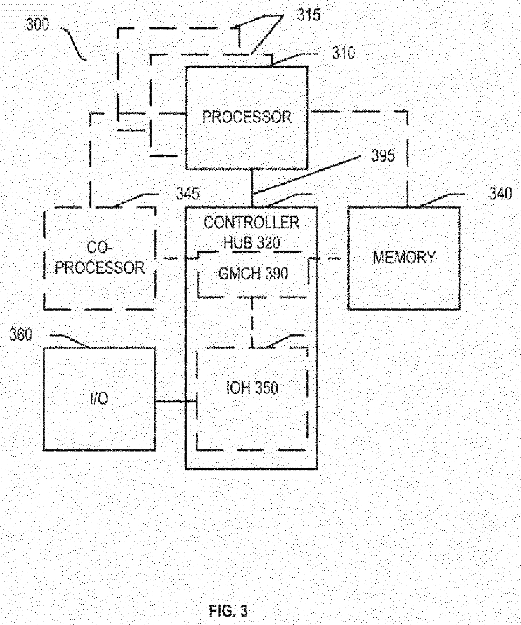

**Figures 3-6** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 3****,** shown is a block diagram of a system 300 in accordance with one embodiment of the present invention. The system 300 may include one or more processors 310, 315, which are coupled to a controller hub 320. In one embodiment the controller hub 320 includes a graphics memory controller hub (GMCH) 390 and an Input/Output Hub (IOH) 350 (which may be on separate chips); the GMCH 390 includes memory and graphics controllers to which are coupled memory 340 and a coprocessor 345; the IOH 350 is couples input/output (I/O) devices 360 to the GMCH 390. Alternatively, one or both of the memory and graphics controllers are integrated within the processor (as described herein), the memory 340 and the coprocessor 345 are coupled directly to the processor 310, and the controller hub 320 in a single chip with the IOH 350.

The optional nature of additional processors 315 is denoted in **Figure 3** with broken lines. Each processor 310, 315 may include one or more of the processing cores described herein and may be some version of the processor 200.

The memory 340 may be, for example, dynamic random access memory (DRAM), phase change memory (PCM), or a combination of the two. For at least one embodiment, the controller hub 320 communicates with the processor(s) 310, 315 via a multi-drop bus, such as a frontside bus (FSB), point-to-point interface such as QuickPath Interconnect (QPI), or similar connection 395.

In one embodiment, the coprocessor 345 is a special-purpose processor, such as, for example, a high-throughput MIC processor, a network or communication processor, compression engine, graphics processor, GPGPU, embedded processor, or the like. In one embodiment, controller hub 320 may include an integrated graphics accelerator.

There can be a variety of differences between the physical resources 310, 315 in terms of a spectrum of metrics of merit including architectural, microarchitectural, thermal, power consumption characteristics, and the like.

In one embodiment, the processor 310 executes instructions that control data processing operations of a general type. Embedded within the instructions may be coprocessor instructions. The processor 310 recognizes these coprocessor instructions as being of a type that should be executed by the attached coprocessor 345. Accordingly, the processor 310 issues these coprocessor instructions (or control signals representing coprocessor instructions) on a coprocessor bus or other interconnect, to coprocessor 345. Coprocessor(s) 345 accept and execute the received coprocessor instructions.

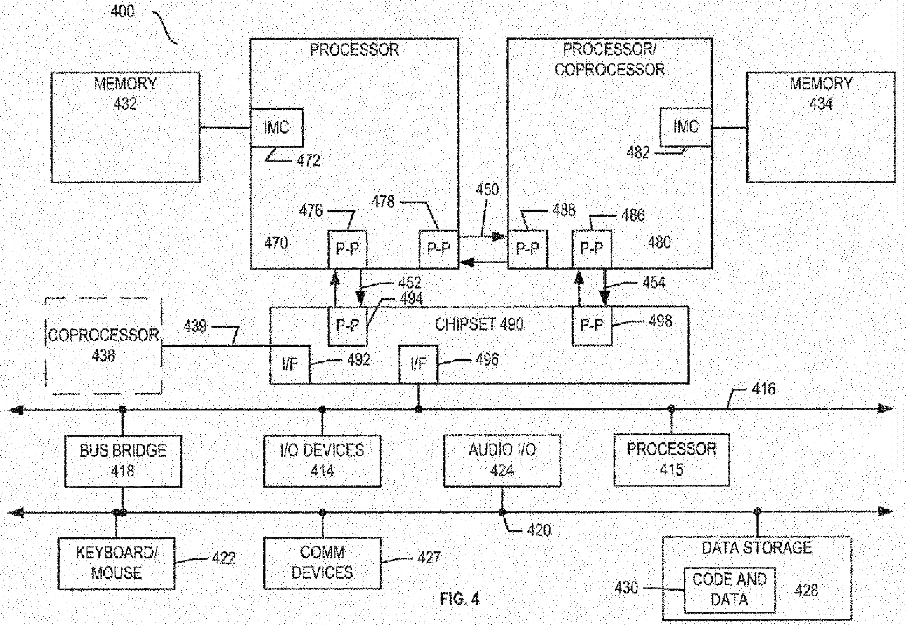

Referring now to **Figure 4****,** shown is a block diagram of a first more specific exemplary system 400 in accordance with an embodiment of the present invention. As shown in **Figure 4****,** multiprocessor system 400 is a point-to-point interconnect system, and includes a first processor 470 and a second processor 480 coupled via a point-to-point interconnect 450. Each of processors 470 and 480 may be some version of the processor 200. In one embodiment of the invention, processors 470 and 480 are respectively processors 310 and 315, while coprocessor 438 is coprocessor 345. In another embodiment, processors 470 and 480 are respectively processor 310 coprocessor 345.

Processors 470 and 480 are shown including integrated memory controller (IMC) units 472 and 482, respectively. Processor 470 also includes as part of its bus controller units point-to-point (P-P) interfaces 476 and 478; similarly, second processor 480 includes P-P interfaces 486 and 488. Processors 470, 480 may exchange information via a point-to-point (P-P) interface 450 using P-P interface circuits 478, 488. As shown in **Figure 4****,** IMCs 472 and 482 couple the processors to respective memories, namely a memory 432 and a memory 434, which may be portions of main memory locally attached to the respective processors.

Processors 470, 480 may each exchange information with a chipset 490 via individual P-P interfaces 452, 454 using point to point interface circuits 476, 494, 486, 498. Chipset 490 may optionally exchange information with the coprocessor 438 via a high-performance interface 439. In one embodiment, the coprocessor 438 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 490 may be coupled to a first bus 416 via an interface 496. In one embodiment, first bus 416 may be a Peripheral Component Interconnect (PCI) bus, or a bus such as a PCI Express bus or another third generation I/O interconnect bus, although the scope of the present invention is not so limited.

As shown in **Figure 4****,** various I/O devices 414 may be coupled to first bus 416, along with a bus bridge 418 which couples first bus 416 to a second bus 420. In one embodiment, one or more additional processor(s) 415, such as coprocessors, high-throughput MIC processors, GPGPU's, accelerators (such as, e.g., graphics accelerators or digital signal processing (DSP) units), field programmable gate arrays, or any other processor, are coupled to first bus 416. In one embodiment, second bus 420 may be a low pin count (LPC) bus. Various devices may be coupled to a second bus 420 including, for example, a keyboard and/or mouse 422, communication devices 427 and a storage unit 428 such as a disk drive or other mass storage device which may include instructions/code and data 430, in one embodiment. Further, an audio I/O 424 may be coupled to the second bus 420. Note that other architectures are possible. For example, instead of the point-to-point architecture of **Figure 4****,** a system may implement a multi-drop bus or other such architecture.

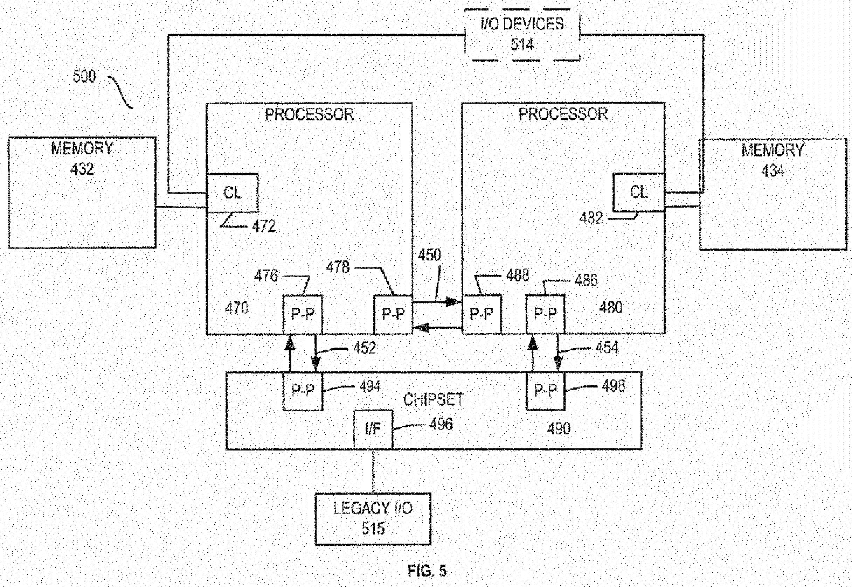

Referring now to **Figure 5****,** shown is a block diagram of a second more specific exemplary system 500 in accordance with an embodiment of the present invention. Like elements in **Figures 4** and **5** bear like reference numerals, and certain aspects of **Figure 4** have been omitted from **Figure 5** in order to avoid obscuring other aspects of **Figure 5****.**

**Figure 5** illustrates that the processors 470, 480 may include integrated memory and I/O control logic ("CL") 472 and 482, respectively. Thus, the CL 472, 482 include integrated memory controller units and include I/O control logic. **Figure 5** illustrates that not only are the memories 432, 434 coupled to the CL 472, 482, but also that I/O devices 514 are also coupled to the control logic 472, 482. Legacy I/O devices 515 are coupled to the chipset 490.

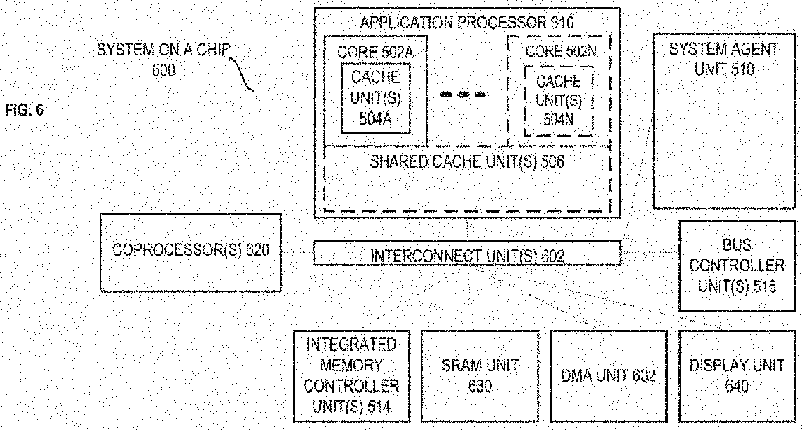

Referring now to **Figure 6****,** shown is a block diagram of a SoC 600 in accordance with an embodiment of the present invention. Similar elements in **Figure 2** bear like reference numerals. Also, dashed lined boxes are optional features on more advanced SoCs. In **Figure 6****,** an interconnect unit(s) 602 is coupled to: an application processor 610 which includes a set of one or more cores 202A-N and shared cache unit(s) 206; a system agent unit 210; a bus controller unit(s) 216; an integrated memory controller unit(s) 214; a set or one or more coprocessors 620 which may include integrated graphics logic, an image processor, an audio processor, and a video processor; an static random access memory (SRAM) unit 630; a direct memory access (DMA) unit 632; and a display unit 640 for coupling to one or more external displays. In one embodiment, the coprocessor(s) 620 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 430 illustrated in **Figure 4****,** may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

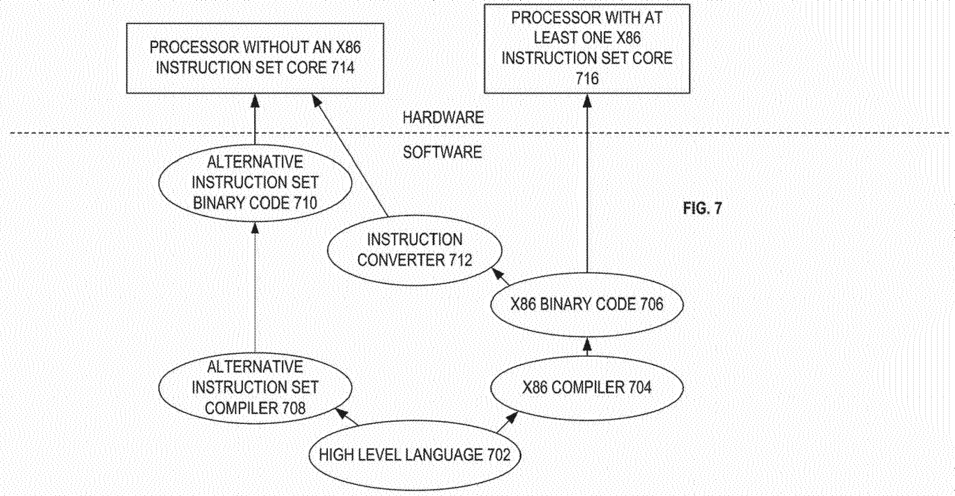

**Figure 7** is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. **Figure 7** shows a program in a high level language 702 may be compiled using an x86 compiler 704 to generate x86 binary code 706 that may be natively executed by a processor with at least one x86 instruction set core 716. The processor with at least one x86 instruction set core 716 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 704 represents a compiler that is operable to generate x86 binary code 706 (e.g., object code) that can, with or without additional linkage processing, be executed on the processor with at least one x86 instruction set core 716. Similarly, **Figure 7** shows the program in the high level language 702 may be compiled using an alternative instruction set compiler 708 to generate alternative instruction set binary code 710 that may be natively executed by a processor without at least one x86 instruction set core 714 (e.g., a processor with cores that execute the MIPS instruction set of MIPS Technologies of Sunnyvale, CA and/or that execute the ARM instruction set of ARM Holdings of Sunnyvale, CA). The instruction converter 712 is used to convert the x86 binary code 706 into code that may be natively executed by the processor without an x86 instruction set core 714. This converted code is not likely to be the same as the alternative instruction set binary code 710 because an instruction converter capable of this is difficult to make; however, the converted code will accomplish the general operation and be made up of instructions from the alternative instruction set. Thus, the instruction converter 712 represents software, firmware, hardware, or a combination thereof that, through emulation, simulation or any other process, allows a processor or other electronic device that does not have an x86 instruction set processor or core to execute the x86 binary code 706.

### APPARATUS AND METHOD FOR CONFIGURING FAN-IN AND FAN-OUT CONNECTIONS IN A NEUROMORPHIC PROCESSOR

One embodiment of the invention comprises a reconfigurable neuromorphic architecture that can support a full fan-in or fan-out connectivity without requiring additional connectivity memory. In particular, the neuromorphic architecture includes small neuron groups tiled on a network-on-chip (NoC) with distributed synaptic memory. The neuromorphic architecture can span the entire connectivity range from full fan-out to all neurons to full fan-in connections from all the neurons. In one embodiment, the fan-out connections for the neurons are represented by wildcard masked address bits (also known as don't care bits) and the number of wildcard bits denotes the number of neuron groups that a particular neuron connects to. By maximizing the number of wildcard bits, full fan-out connectivity for neurons may be achieved. To enable full fan-in connectivity for neurons, one embodiment of the neuromorphic architecture employs a dummy neuron in every neuron group and the neuron that requires full fan-in connectivity borrows the synaptic memory resources from the dummy neuron(s). The dummy neuron also serves as the forwarding link for redirecting incoming spike packets to the borrower neuron by storing its address in the wildcard masked address location.

Computer architectures such as the traditional von Neumann model typically handle task processing sequentially and are thus not well suited for building cognitive systems that often involve complex and massive parallel computations. Neuromorphic architectures address this issue by distributing a large number of small compute blocks and co-associated memory blocks in a massively interconnected network-on-chip (NoC). Each of these small blocks are called a neuron. According to an embodiment, a neuron is a circuit with one or more inputs and one or more outputs. A neuron receives spikes from other neurons, integrates them over time, and then output analog action and/or digital spike events. "Neurons" constitute the integral component of the compute block and "synapses" represent the memory block. A small number of neurons are usually grouped together to form a neuron group which, along with the associated synaptic memory blocks is known as a "neurosynaptic core."

Existing neuromorphic designs leverage this distributed architecture for building large-scale neuromorphic computers. In biological neural networks, it is not uncommon for neurons to have extremely large number of fan-out and fan-in connections (e.g., 10K connections per neuron). Since the scaling of interconnects gets more difficult and complex as the number of connections increases, it is a challenge to achieve the same level of inter-connectivity in silicon as those found in biology. This is one of the major motivations behind grouping neurons into neurosynaptic cores and establishing communication links between the cores. Moreover, in large-scale neuromorphic computer designs that include tens of thousands of neurons, the synaptic memory alone can constitute up to 80% of the entire silicon area. The size of synaptic memory is not only directly related to the number of neurons in the computer, but even more so dictated by the neurons' connectivity requirements. As such, techniques that can support fully reconfigurable fan-in and fan-out connectivity between neurons in a neuromorphic computing architecture without significantly increasing synaptic memory size and/or processing time are highly desirable.

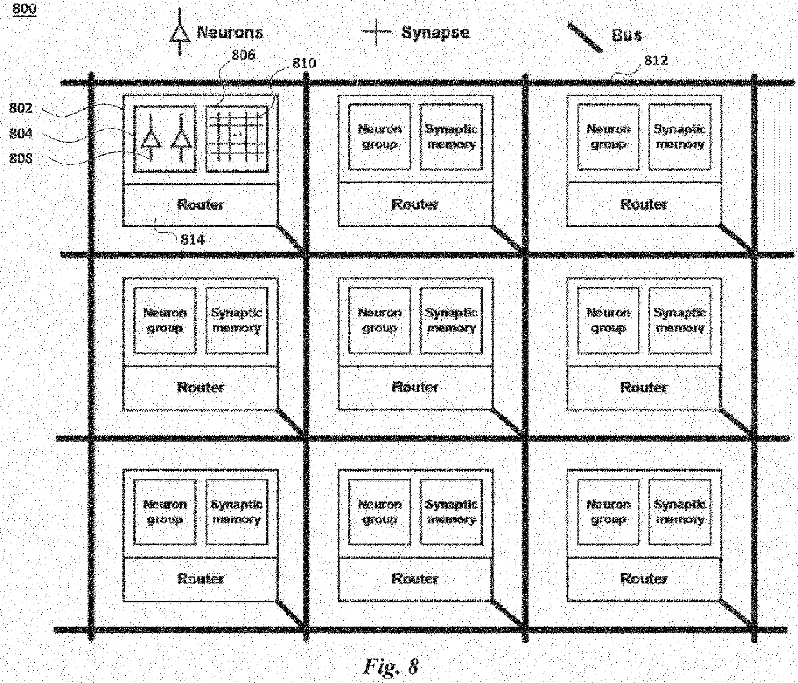

**Figure 8** illustrates an exemplary neuromorphic computer architecture comprising distributed computing, memory, and communication blocks in accordance with an embodiment. The neuromorphic computer system 800 comprises a plurality of neurosynaptic cores (e.g., core 802) that are interconnected by bus 812. Each of the neurosynaptic cores comprises a neuron group (e.g., group 804) with a plurality of neurons (e.g., neuron 808), a synaptic memory (e.g., memory 806) to establish synapses between the neurons, and a router (e.g., router 814) to establish synapses with other neurosynaptic cores over the bus. In one embodiment, the bus 812 comprises a packet bus capable of transporting packets (e.g., spike packets) from the router of one core to the routers of one or more other cores. According to an embodiment, the synaptic memory 806 is implemented as a crossbar or similar interconnect structure for interconnecting neurons. However, any suitable interconnect structure may be used.

In one embodiment, a synaptic memory such as a synaptic static random access memory (SRAM), stores the synaptic weights of the fan-out connections for a pre-synaptic neuron in a row. Each column block in that row indicates a fan-out connection from the pre-synaptic neuron to a post-synaptic neuron. In similar fashion, the fan-in connections for a post-synaptic neuron are stored in a column and each row block in that column corresponds to a pre-synaptic neuron's axon. In the access mechanism described here, the physical size of the synaptic SRAM (i.e. # of rows X # of columns) is dictated by the number of maximum fan-in and fan-out connections a neuron can potentially have. For instance, in a neuromorphic computer that comprises 16k neurons, an SRAM of at least 16k rows by 16k columns is required to store all the connections for full fan-in/fan-out connectivity between the neurons. With 8b weight values, a neuromorphic computer with 16K neurons would require an SRAM of 256MB in order to achieve full fan-in and fan-out connectivity between the all the neurons.

To deal with the limitations imposed by synaptic memory requirements as well as routing overheads, existing neuromorphic computer designs typically restrict the number of fan-out connections allowed (e.g., 256 connections per neuron) or employ a separate connectivity memory for storing additional fan-out connections. However, there are limitations associated with each of these current designs. For instance, restricting the number of fan-out connections limits the reconfigurability of the connections. Employing additional storage to store fan-out connections is hard to scale for large neuromorphic architectures because a separate connectivity memory still incurs area, processing, power, and communication overheads.

To overcome these shortcomings, a reconfigurable neuromorphic architecture is described which maintains extremely large fan-in or fan-out connections, such as those present in biological neural networks, without incurring the drawbacks mentioned above. In at least some embodiments, a wildcard masked addressing scheme is used to enable reconfigurable maximum fan-out and fan-in connections between the neurons.

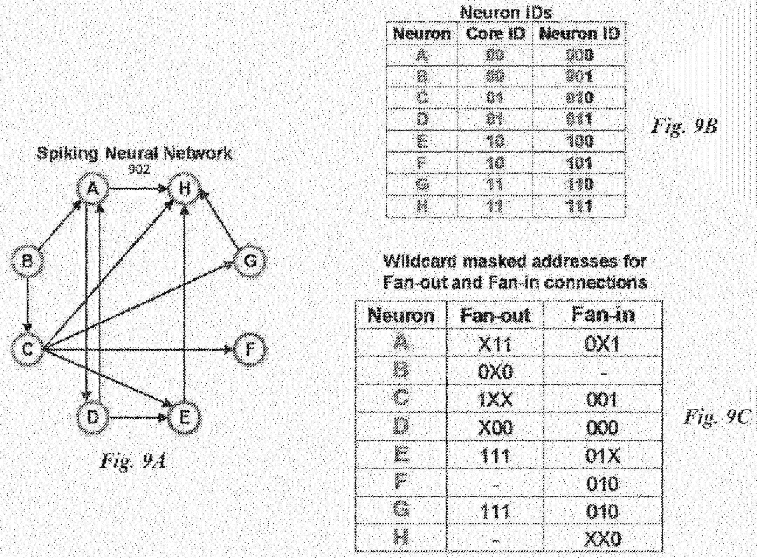

**Figures 9A-C** illustrate an exemplary embodiment which applies the wildcard masked addressing scheme to a spiking neural network (SNN) topology 902. To better understand the arrangement of neurons, let *N* denote the total number of neurons in neural network, k denote the number of neurosynaptic cores, n denote the number of neurons per neurosynaptic core and M denote the total available synaptic memory size. The number of neurons per neurosynaptic core is illustrated by the relationship *n* = *N*/*k.* In **Figure 9A****,** SNN 902 comprises 8 total neurons (i.e., *N* = 8) that are separated into 4 neurosynaptic cores (i.e., *k* = 4), such that each neurosynaptic core comprises 2 neurons (i.e., *n* = 2). **Figure 9B** is a table specifying the core ID associated with each of the neurons A-H (i.e., encoded with 2 bits to distinguish between 4 neurosynaptic cores) and a neuron ID, which sometimes is also referred to as neuron address. According to an embodiment, the ID of a given neuron is determined by concatenating the core ID of the given neuron's parent neurosynaptic core with the local ID of the given neuron within the neurosynaptic core. For example, if neuron A is located in inside neurosynaptic core "00" and has a local ID of "0" within core "00," its neuron ID would be "000" as illustrated in **Figure 9B** (i.e., by concatenating neuron A's parent core ID with its local ID).

In one embodiment, the wildcard masked addressing scheme, as applied to neural connections in a neuromorphic computer, works by storing each neuron's fan-in and fan-out connections as wildcard masked addresses. Each wildcard mask address may be used to represent one or more neuron IDs.

**Figure 9C** illustrates an exemplary table storing the fan-in and fan-out addresses for each of the neurons A-H using wildcards designated by an "X." Neuron A, for example has a fan out of X11 meaning a fan out to any neurons with a neuron ID ending in 11. In the illustrated example, this includes neuron D (having neuron ID 011) and neuron H (having neuron ID 111). **Figure 9A** illustrates these fan out connections with arrows connecting neuron A to neurons D and H.

In one embodiment, when the router associated with neuron A receives a spike from neuron A, it looks to the connections table illustrated in **Figure 9C** to obtain the wildcard masked fan-out address for neuron A (i.e., "X11 "). It then permutes the wildcard mask in the fan-out address to form different neuron IDs (i.e., "011" and "111") to identify the output neurons (i.e., neurons D and H, respectively). Once the output neurons are identified from the wildcard mask fan-out address, the router then routes the spike or packet to these identified output neurons for spike integration and synaptic weight updates in accordance to spike-timing-dependent plasticity (STDP) operations.

The wildcard mask addressing scheme may also be applied to the fan-in connections used to send spikes from one neuron to all of its fan-in connections to perform weight update and/or spike integration operations. Returning to **Figure 9C****,** the fan-in value for neuron A is 0X1, meaning that the fan in to neuron A is from neurons having a neuron ID starting with a 0 and ending with a 1. In the illustrated example, this includes neuron B (001) and neuron D (011). **Figure 9A** illustrates these fan-in connections with arrows connecting neurons B and D to neuron A. Consequently, in one embodiment, when the neuron A spikes, the router receiving the spike packet routes the packet to fan-in neurons with IDs "001" (i.e., neuron B) and "011" (i.e., neuron D) for weight update operations and/or spike integration. In the case of undirected networks such as Restricted Boltzmann Machines (RBM), the spikes sent to fan-in connections are used to perform both spike integration and weight update operations. In case of directed networks such as the one shown in **Figure 9A****,** the fan-in spikes are used to perform only weight updates.

The application of the wildcard masked addressing scheme described here reduces the typical bottlenecks associated with current neuromorphic computer designs because the wildcard masked addressing scheme is highly scalable and requires only 2log₂(N) bits of storage per neuron. The factor 2 comes from the coding scheme used in wildcard masking. For example, in one embodiment of the wildcard masking scheme, 2 bits are used to represent each bit in the wildcard masked address, such that "00" denotes a zero, "11" denotes a one, and "01" denotes a wildcard (X).

According to an embodiment, if a neuron has to fan-out to all the neurons across the neurosynaptic cores, all the bits in the wildcard masked fan-out address for that neuron would be set to X. The same applies to the case of full fan-in. If a neuron receives fan-in connections from all of the neurons in the neurosynaptic cores, all the bits in the wildcard masked fan-in address for that neuron would be set to X.

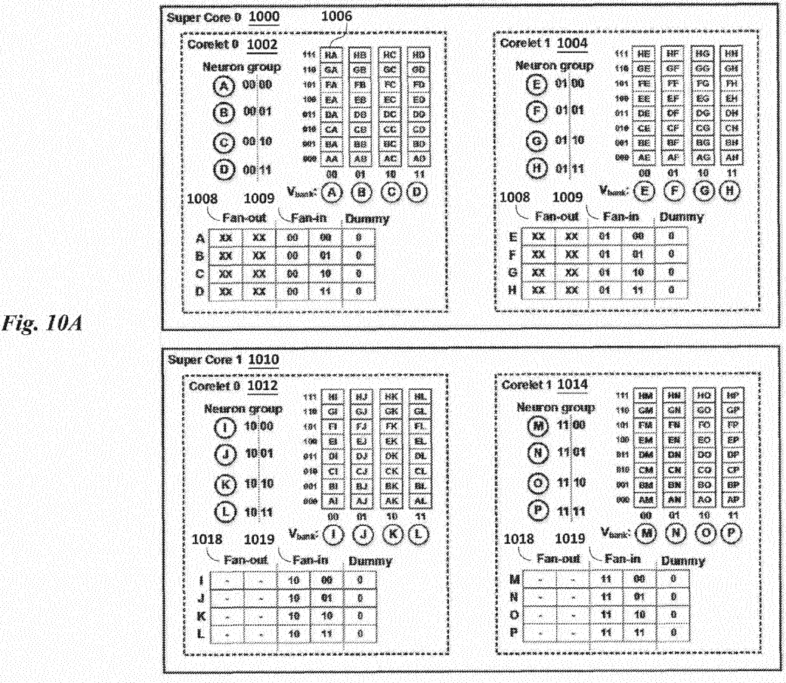

According to some embodiments, a neuromorphic processor may further group modular neurosynaptic cores (also known as "corelets"), such as 802 of **Figure 8****,** into "super cores." **Figure 10A** illustrates a logical representation of a neuromorphic computer comprising super cores 1000 and 1010. Super core 1000 comprises 2 corelets 1002 and 1004 that share a common router block (not shown). Super core 1010 also comprises 2 corelets 1012 and 1014 that share a common router block (not shown). Each corelet includes a synaptic memory and each neuron in the corelet has a corresponding storage area in the synaptic memory referred to as the corelet's "virtual bank." In **Figure 10A****,** the virtual bank corresponding to each neuron A-D is identified (i.e., at the bottom of each virtual bank column such as 1006 which is neuron A's virtual bank). The virtual bank is used to store a corresponding corelet's connection information, such as synaptic weights, fan-in connections, fan-out connections, etc.

In one embodiment, such as the one illustrated in **Figure 10A****,** each entry in the fan-out address sections 1008 and 1018 stores a wildcard fan-out address identifying corresponding neurons. According to the embodiment, the wild card fan-out address employs the wildcard addressing scheme described above. In contrast, the entries in the fan-in address sections 1009 and 1019 do not directly store the fan-out address of a neuron. Rather, each entry in the fan-in address sections 1009, 1019 stores the information used to identify the virtual bank containing the fan-in connections for the respective neuron.

According to an embodiment, there are *m* corelets in a super core and *n* neurons in each corelet, resulting in each corelet's synaptic memory including *n* virtual banks, one for each neuron in the corelet. To provide maximum fan-in connectivity within a super core that shares a router block, a neuron's virtual bank needs to have enough storage space to account for all the fan-in connections in a super core. Since there are *n* x *m* neurons per super core and each neuron in the super core can potentially receive a fan-in connection from every neuron in the super core, including itself, each virtual bank thus contains *n* x *m* rows, one for each possible fans-in connection. To identify a neuron's virtual bank, according to an embodiment, the least significant bit(s) (LSB) of the neuron's ID are used. For example, in **Figure 10A****,** the right-most two bits of neuron A's ID "0000" are used to identify its virtual bank (i.e., virtual bank 00). In other embodiments, different bits or portions of a neuron's ID are used to identify the neuron's virtual bank.

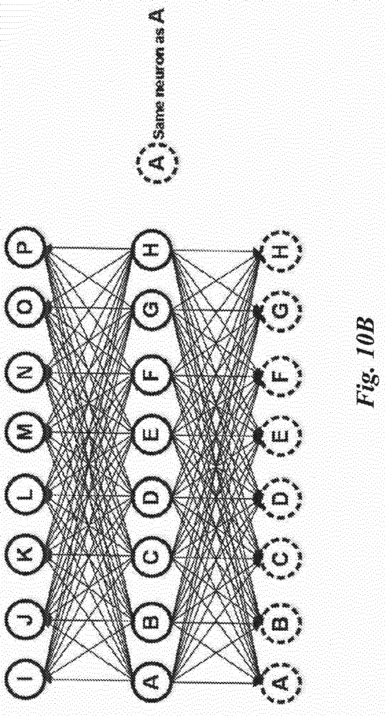

**Figure 10B** shows the mapping of an SNN topology comprising neurons A-P. According to the mapping, neurons A-H all have maximum fan-outs. This means neurons A through H each fans out to all other neurons in the neuromorphic computer, including themselves. For instance, neuron A fans-out to neurons A-P, as denoted by the arrows pointing out of neurons A-H. The arrows pointing into the dotted nodes A-H represent the fan-in connections from neurons A-H into themselves. In contrast, neurons I-P only have arrows pointing in and none pointing out. As such, neurons I-P have only fan-in connections with no fan-out. In a typical neural network, neurons I to P would represent end nodes or output neurons outputting results.

This maximum fan-out of neurons A-H is achieved by filling every address in their respective fan-out address sections 308 with wildcard mask bits "X." Whenever a neuron from neurons A through H spikes, the spike packet is sent to all the neurons in the neuromorphic computer for spike integration. The router receiving the incoming spike packet processes the wildcard value X and sends it to the corresponding destinations by resolving the wildcard values to 0 and 1. On the other hand, neurons I to P do not have any address stored in their respective fan-out address sections 1018 because they do not fan-out to any neurons.

With respect to fan-in connections, the fan-in address section of a neuron (*e.g.,* 1009 and 1019) holds information for identifying the virtual bank containing the fan-in connections for that neuron. In certain embodiments, the fan-in address comprises a neuron address or neuron ID useable for identifying a virtual bank. In one embodiment, the fan-in address is a concatenation of a super core ID, a corelet ID, and a virtual bank ID associated with the virtual bank. According to the embodiment, the most significant bits (MSB) of a fan-in address are used to identify the super core that includes the corelet containing the virtual bank. Once the corelet is identified, the LSBs of the fan-in address are used to identify the virtual bank within the corelet containing the fan-in connections. For example, in **Figure 10A****,** neuron A's fan-in address stored in the fan-in address section 1009 is "0000." This means the fan-in connections for neuron A are stored in virtual bank "00" (i.e., 1006) within corelet "0" of super core "0." When neuron A spikes, the spike integration packets are sent from neuron A to all of neuron A's fan-out connections, which is denoted by the fan-out address (i.e., XXXX) stored in neuron A's fan-out section 1008. Next, the fan-in address section 1009 of neuron A is accessed. The fan-in address section 1009 of neuron A identifies the virtual bank (i.e. 0000) in which neuron A's fan-in connections are stored. Fan-in connections identify the source neurons from which a spiking neuron is to obtain information for perform operations such as weight updates using STDP and spike integration. The type of operations performed depend on the type of spiking neural network.

**Figure 11A** shows a logical representation of another neuromorphic processor similar to the one shown in **Figure 10A****,** the difference being that the neurons A to H in the neuromorphic processor of **Figure 11A** are now configured for maximum fan-in instead of maximum fan-out. The corresponding topology of the SNN is shown in **Figure 11** **B.** The topology shows that each one of neurons A to H receives a fan-in connection from all available neurons in the neuromorphic computer, which includes neurons in both super cores 0 and 1. What this means is that neurons A to H receives fan-in connections not only from neurons A-H of super core 0, but also from neurons I-P of super core 1. In **Figure 11A****,** the fan-out address sections (i.e., 1108 and 1118) still stores fan-out addresses in accordance to the wildcard mask addressing scheme explained above. For example, since neuron A has fan-out connections to all the neurons from A (0000) to H (0111), the fan-out address for neuron A can thus be written as wildcard masked address "0XXX".

With respect to a neuron's fan-in connections, as noted above, they are stored in the neuron's corresponding virtual bank in synaptic memory. However, due to the size limitation of synaptic memory, a restriction may be placed on the number of fan-in connections a virtual bank can hold. As such, it is likely that in a maximum fan-in situation, a neuron's virtual bank may not have enough storage blocks to accommodate all of the fan-in connections for that neuron. For example, as illustrated in **Figure 11** **B,** the maximum number of fan-in connections a neuron may potential have is 16. This calculated by the formula *n* x *k,* where *n* is the number of neurons per corelet and *k* is the number of corelets in the neuromorphic computer, which includes both super cores 0 and 1. However, as shown in **Figure 11A****,** there are only 8 rows in any virtual bank (e.g., virtual bank 1106 for neuron A) available for storing fan-in connections. As noted from before, the number of rows in in a virtual bank calculated by *n* x *m,* where *m* is the number of corelets in a super core. Since there are more fan-in connections (i.e., 16) than what can be stored in neuron A's virtual bank (i.e., 8), existing neuromorphic computer designs either cap off the number of fan-in connections that can be stored, or create larger virtual banks by increasing the size of the synaptic memory. However, as noted above, these current solutions are not ideal.

To better resolve this issue, an embodiment of the present invention introduces a resource sharing mechanism to the neuromorphic processor architecture described above. The use of a resource sharing mechanism enables a neuron that has more fan-in connections than what can be stored in its virtual bank, to borrow the virtual bank(s) from other neurons that do not have any fan-in connections. For example, neurons I to P of **Figure 11** **B** have fan-out connections but no fan-in connections. This means the corresponding virtual banks of neurons I to P are not being utilized. As such, according to an embodiment, neurons A to H may borrow from neurons I to P these unused virtual banks to store any overflow fan-in connections. As illustrated in **Figure 11A****,** the overflow fan-in connections for neuron A, such as IA - PA 1116, are stored in virtual bank 00 of corelet 0 of super core 1. These connections are accessed whenever neurons I to P spike and the spike integration is to be performed in neuron A. However, since these fan-in connections are located in a different super core than the one in which neuron A is located, neuron A does not have direct access to them. To get around this problem and to enable spike integration in neuron A, a "dummy" column is included in the fan-in/fan-out connection table according to an embodiment. When the entry in the dummy column corresponding to a neuron is activated, it is an indication that the neuron's virtual bank is being used to store fan-in connections for another neuron. A neuron that "lends" its virtual bank to another neuron is the lender neuron. A neuron that stores its fan-in connection in the virtual bank of another neuron is the borrower neuron. According to an embodiment, when a lender neuron's dummy column in the connections table is set to "1," it means the lender neuron's fan-in address column does not store the fan-in addresses for the lender neuron, but rather the neuron address or ID of the borrower neuron. Having the borrower neuron's address allows the incoming spike packets to be sent to the borrower neuron for spike integration. For example, as illustrated by **Figure 11A****,** neuron I stores the address of neuron A (i.e., 0000) in its entry 1121 of the fan-in address section 1119 because neuron A borrows the virtual bank of neuron I to store neuron A's overflow fan-in connections. Neuron I's entry in the "Dummy" column 1123 is set to 1 to indicate that it is a lender neuron. Whenever neurons I to P spike, the corresponding fan-in connection inside neuron I's virtual bank 1116 is accessed. In some embodiments, accessing the fan-in connection means accessing the synaptic weights in neuron I's virtual bank and delivering them to neuron A, rather than neuron I, for spike integration.

According to these embodiments, adjusting the wildcard masked address bits and "dummy" fan-in locations enables a neuromorphic processor to switch between maximum fan-out and maximum fan-in network topologies without incurring significant synaptic memory size and processing penalties. For example, according to existing neuromorphic computer designs, a neuromorphic computer with 16K neurons that use 8-bit wide synaptic weights, a synaptic memory of size 256MB is needed to enable full fan-in or fan- out connectivity. In contrast, using the techniques described herein reduces the required synaptic memory size to 4MB to achieve full fan-in or fan-out connectivity.

**Figure 12** illustrates a method in accordance with one embodiment of the invention. The method may be implemented on the processing architectures described above but is not limited to any particular processing architecture.

At 1201, a unique neuron address is assigned to each one of a set of neurons in a neuromorphic computer. As mentioned, a neuron address may be used to establish a fan-in or fan-out connections with the neuron. At 1202, certain portions of the neuron addresses in a first neuron are specified using wildcard values. For example, in one implementation, a first bit field represents a binary 1 (e.g., 11), a second bit field represents a binary 0 (e.g., 00) and a third bit field represents a wildcard (e.g., 01 or 10). At 1203, fan-in and fan-out connections are formed in the first neuron by substituting multiple binary values for the wildcard values. For example, when translating a neuron's address with a wildcard value, that wildcard value will be substituted with a 0 to arrive at a first neuron address and a 1 to arrive at a second neuron address, thereby facilitating a large number of fan-in and fan-out connections. Using this technique, the encoding of 11 will be translated to a 1, the 00 encoding will be translated to a 0 and the 10 (or 01) will be translated to a 0 for one address and a 1 for the other address).

Although some embodiments have been described in reference to particular implementations, other implementations are possible according to some embodiments. Additionally, the arrangement and/or order of elements or other features illustrated in the drawings and/or described herein need not be arranged in the particular way illustrated and described. Many other arrangements are possible according to some embodiments.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

In the description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still cooperate or interact with each other.

An embodiment is an implementation or example of the inventions. Reference in the specification to "an embodiment," "one embodiment," "some embodiments," or "other embodiments" means that a particular feature, structure, or characteristic described in connection with the embodiments is included in at least some embodiments, but not necessarily all embodiments, of the inventions. The various appearances "an embodiment," "one embodiment," or "some embodiments" are not necessarily all referring to the same embodiments.

Not all components, features, structures, characteristics, etc. described and illustrated herein need be included in a particular embodiment or embodiments. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

The above description of illustrated embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize.

These modifications can be made to the invention in light of the above detailed description. The terms used in the following claims should not be construed to limit the invention to the specific embodiments disclosed in the specification and the drawings. Rather, the scope of the invention is to be determined entirely by the following claims, which are to be construed in accordance with established doctrines of claim interpretation.

## Claims

1. An apparatus comprising:
a plurality of neurons, each neuron uniquely identifiable with a neuron identifier (ID);
at least one memory to store neuron addresses with wildcard values to establish fan-in and/or fan-out connections between the neurons; and
a router to translate at least one neuron address containing wildcard values into two or more neuron IDs to establish the fan-in and/or fan-out connections between the neurons.

2. The apparatus as in claim 1, wherein the neuron addresses are encoded using a first two bit value to represent a wildcard value, a second two bit value to represent a binary 1 and a third two bit value to represent a binary 0.

3. The apparatus as in claim 2, wherein translating the neuron address comprises replacing the first two bit value with a 1 to generate a first neuron ID for the fan-in and/or fan-out connections and replacing the first two bit value with a 0 to generate a second neuron ID for the fan-in and/or fan-out connections.

4. The apparatus as in any one of claims 1-3 further comprising:
at least one neurosynaptic core comprising one or more of the plurality of neurons.

5. The apparatus as in claim 4, wherein the neuron ID for each of the plurality of neurons comprises a core identifier to identify the neurosynaptic core that the neuron belongs to and a local identifier to identify the neuron within the neurosynaptic core.

6. The apparatus as in claim 5, wherein the wildcard value may be used within the core identifier and/or the local identifier.

7. The apparatus as in any one of claims 1-6, wherein the at least one memory comprises:
a virtual bank to store connection information for each neuron including synaptic weights, fan-in connections, and fan-out connections.

8. The apparatus as in claim 7, wherein a virtual bank of a first neurosynaptic core is configured to store connection information for a neuron on a second neurosynaptic core when a portion of a virtual bank associated with the neuron on the second neurosynaptic core is full.

9. The apparatus as in claim 8, wherein a dummy indicator is to be set on the first neurosynaptic core to indicate that the virtual bank of the first neurosynaptic core is storing the connection information for the neuron on the second neurosynaptic core.

10. The apparatus as claim 9, wherein an incoming spike packet is sent to the neuron on the second neurosynaptic core if the dummy indicator is set and to a neuron corresponding to the virtual bank on the first neurosynaptic core if the dummy indicator is not set.

11. A method comprising:
assigning a unique neuron address to each one of the plurality of neurons in the neuromorphic computer, each neuron address to uniquely identify a neuron; and
using a wildcard masked addressing scheme to address a plurality of connections between a first neuron and one or more other neurons in the neuromorphic computer,
wherein the scheme comprises using one or more wildcard bits in a wildcard connection address to allow the wildcard connection address to form different neuron addresses for identifying different neurons to be connected with the first neuron.

12. A method comprising:
assigning a portion of a synaptic memory to each of the plurality of neurons in the neuromorphic computer, wherein each neuron's assigned portion of the synaptic memory is configurable to store a set of connection information to be used by a neuron to connect to one or more other neurons, and each neuron is assigned a neuron address to uniquely identify a neuron;
storing a first set of connection information associated with a first neuron in the portion of the synaptic memory assigned to the first neuron when a dummy indicator is inactive; and
storing a second set of connection information associated with a second neuron in the portion of the synaptic memory assigned to the first neuron when the dummy indicator is active.

13. An apparatus comprising:
means for assigning a unique neuron address to each one of a plurality of neurons in a neuromorphic computer, each neuron address to uniquely identify a neuron; and
means for using a wildcard masked addressing scheme to address a plurality of connections between a first neuron and one or more other neurons in the neuromorphic computer, wherein the scheme comprises using one or more wildcard bits in a wildcard connection address to allow the wildcard connection address to form different neuron addresses for identifying different neurons to be connected with the first neuron.

14. An apparatus comprising means to perform a method as claimed in any preceding claim.

15. Machin-readable storage including machine-readable instructions, when executed, to implement a method or realize an apparatus as claimed in any preceding claim.
